# EUROPEAN PATENT APPLICATION

(11) **EP 4 760 551 A1**
(43) Date of publication of application: **17.06.2026**
(21) Application number: 24218792.0
(22) Date of filing: 10.12.2024
(51) Int. Cl.: G06F 21/10, H04N 21/254, H04N 21/442

(54) **DETECTING SUSPICIOUS ACTIVITY IN CONTENT STREAMING SYSTEMS**

(71) Applicant: Nagravision Sàrl, 1033 Cheseaux-sur-Lausanne (CH)
(72) Inventor: MARIE, Pascal, 35510 Cesson-Sévigné (FR)
(74) Representative: Novagraaf International SA

(57) **Abstract**

The present disclosure provides a computer-implemented method for determining at least one suspicious subscriber to a service in a content streaming system (100) delivering encrypted contents to devices (200). The method includes changing a plurality of keys (520), each key being associated with at least one specific streaming content and delivered to devices within DRM licenses to decrypt the content for playback; monitoring license requests (515, 525, 535) made by subscribers to at least one DRM server (120) delivering the DRM licenses to obtain monitoring data; and determining a suspicious activity (540) from at least one subscriber by analyzing a license request behavior of said at least one subscriber in relation to the key changes, based on the monitoring data.

## Description

### TECHNICAL FIELD

The present disclosure relates to content streaming systems, and more particularly to a method, system, and non-transitory computer-readable storage medium for detecting suspicious subscriber activity in a content streaming system delivering encrypted contents to devices.

### BACKGROUND

Digital Rights Management (DRM) systems are widely used in content streaming services to protect digital contents from unauthorized access and distribution. These systems typically employ encryption techniques to secure contents, with decryption keys provided to authorized users through DRM licenses.

Content streaming platforms may offer a variety of digital contents including, in some cases, TV channels, live events, movies, TV shows, music, podcasts, and other media content, each protected by specific encryption keys.

In current DRM implementations, content decryption keys for specific TV channels often remain unchanged for extended periods, sometimes lasting weeks or months. While this approach simplifies key management for streaming service providers, it introduces vulnerabilities that can be exploited by malicious actors. Pirates have discovered methods to extract decryption keys from DRM licenses, allowing them to bypass the DRM protection and illegally redistribute contents. Specifically, a pirate may obtain a DRM license using a valid subscription, extract the decryption key from the DRM license, decrypt the DRM-protected content to obtain the original content without DRM-protection, and redistribute it on a pirate content streaming platform. This process enables unauthorized access to the content without proper authorization or payment. Once a key is compromised, pirates can continue to access and redistribute protected content until the key is rotated (i.e., changed).

Additionally, detecting and identifying subscribers engaged in piracy activities poses a considerable challenge. This challenge may be exacerbated by the fact that pirates are often sophisticated and may use valid subscriptions to mask their activities. In some cases, pirates may employ multiple legitimate accounts to distribute their operations, making detection more difficult. Moreover, pirates may adapt their methods rapidly in response to detection measures, requiring content providers to constantly evolve their monitoring and analysis capabilities.

Therefore, there is a need for improving the situation. In particular, it is desired to provide a method and system for automated detection of suspicious subscribers, which refers to users or subscribers that bypass or manipulate Digital Rights Management protections on content, that overcomes one or more of these problems.

### SUMMARY

This Summary is provided to introduce a selection of concepts in a simplified form that are further described below in the Detailed Description.

In a first aspect, a computer-implemented method for determining at least one suspicious subscriber to a service in a content streaming system delivering encrypted contents to devices is provided. The method comprises: changing a plurality of keys, each key being associated with at least one specific streaming content and delivered to devices within DRM licenses to decrypt the content for playback; monitoring license requests made by subscribers to at least one DRM server delivering the DRM licenses to obtain monitoring data; and determining a suspicious activity from at least one subscriber by analyzing a license request behavior of said at least one subscriber in relation to the key changes, based on the monitoring data. The DRM licenses may be in the form of data files. They may be encrypted and contain the decryption key.

This method enables the detection of potential Digital Rights Management (DRM) exploits by analyzing subscriber behavior in response to key changes. By correlating license requests with scheduled key changes, the system can identify patterns that may indicate unauthorized access attempts or content piracy.

In an embodiment, the method may further include changing the plurality of keys within a scheduled first time interval.

Scheduling key changes within a specific time interval allows for controlled and systematic analysis of subscriber behavior, enhancing the system's ability to detect suspicious activities.

In an embodiment, the method may include determining a suspicious activity within a predetermined second time interval set relative to the first time interval.

Setting a specific analysis time frame relative to the key change interval enables focused examination of subscriber behavior immediately following key changes, when suspicious activities are most likely to occur.

The second time interval may have a first predetermined duration from start of the first time interval and extending after the first time interval.

Extending the analysis period beyond the key change interval allows for detection of delayed suspicious activities that may occur shortly after key changes.

The second time interval may have a second predetermined duration before start of the first time interval, the second duration being less than the first duration.

Including a pre-change analysis period enables detection of a pre-emptive subscriber behavior for obtaining a new decryption key during a pre-delivery period.

In an embodiment, the method may further comprise: generating, by the at least one DRM license server, the monitoring data for the license requests made by subscribers; centrally storing the monitoring data in a database; and retrieving from the database the monitoring data for the license requests made within the second time interval.

Centralized storage and retrieval of monitoring data facilitates comprehensive analysis across the entire content streaming system, enabling more accurate detection of suspicious patterns.

The plurality of keys may be changed simultaneously within the first time interval.

Alternatively, the keys of the plurality of keys may be respectively changed at different times within the first time interval.

Staggered key changes can help manage system load and may reveal more subtle patterns of suspicious behavior.

In an embodiment, the first time interval may be scheduled within a period of time when the number of active subscribers in an expected audience is below a predetermined first audience threshold.

Scheduling key changes during low-activity periods facilitates the detection of suspicious activities.

Alternatively, the first time interval may be scheduled within a period of time when a specific content is being streamed and a number of active subscribers in an expected audience for said specific content is above a predetermined second audience threshold, and, prior to changing a current key associated with a streaming content into a new key, both said current and new keys are included in a same DRM license delivered to devices.

This approach allows for detection of suspicious activities even during high-traffic periods while minimizing service disruption by pre-delivering new keys. In a particular embodiment, accounts for subscribers flagged as suspicious may be temporarily suspended for upcoming key changes during high-traffic periods.

In an embodiment, the step of changing a plurality of keys may comprise a series of key change processes, each key change process comprising changing a plurality of keys associated with a set of selected streaming contents, respectively executed within scheduled first time intervals starting at different times.

Implementing a series of key change processes enhances the system's ability to detect consistent patterns of suspicious behavior over time, reducing false positives.

Determining a suspicious activity may be performed using a machine learning model.

Utilizing machine learning enables more sophisticated and adaptive detection of suspicious activities, improving the system's ability to identify evolving piracy techniques.

The method may further comprise a step of scheduling the changes of the plurality of keys. This may include scheduling, planning the first time interval and selecting the streaming contents associated with the plurality of keys that will be changed within said first time interval.

The step of scheduling the changes of the plurality of keys may be performed manually by an operator through a computing device, or automatically by a scheduler.

This step allows for strategic planning of key changes, optimizing the system's ability to detect suspicious activities across different content types and time periods.

In a second aspect, a system for determining at least one suspicious subscriber in a content streaming system delivering encrypted contents to devices is provided. The system comprises: a key management module configured to change a plurality of decryption keys, each decryption key being associated with at least one specific streaming content and delivered to devices within DRM licenses to decrypt the content for playback; a monitoring system or infrastructure configured to monitor license requests made by subscribers to at least one DRM server delivering the DRM licenses to obtain monitoring data; and an analysis module configured to determine a suspicious activity from at least one subscriber by analyzing a license request behavior of said at least one subscriber in relation to key changes, based on the monitoring data.

This system provides an integrated solution for detecting suspicious subscriber activities in content streaming systems, combining key management, monitoring, and analysis functionalities to identify potential DRM exploits effectively.

In a third aspect, a non-transitory computer-readable storage medium storing instructions that, when executed by a processor, cause the processor to perform a method for determining at least one suspicious subscriber in a content streaming system delivering encrypted contents to devices is provided. The method comprises: changing a plurality of keys, each key being associated with at least one specific streaming content and delivered to devices within DRM licenses to decrypt the content for playback; monitoring license requests made by subscribers to at least one DRM server delivering the DRM licenses to obtain monitoring data; and determining a suspicious activity from at least one subscriber by analyzing a license request behavior of said at least one subscriber in relation to key changes, based on the monitoring data.

This computer-readable storage medium enables implementation of the suspicious subscriber detection method across various computing platforms, providing flexibility in deployment and execution of the detection system.

### BRIEF DESCRIPTION OF FIGURES

Embodiments of the invention will be described, by way of example, with reference to the following drawings, in which:
FIG. 1 illustrates a block diagram of a content streaming system for delivering encrypted contents, according to aspects of the present disclosure.
FIG. 2 illustrates a flowchart of a method for detecting suspicious subscribers in a content streaming system, according to an embodiment.
FIG. 3 illustrates a flowchart for a key changing process in a content streaming system, according to an embodiment.
FIG. 4 illustrates a flowchart of an operation for changing keys in a content streaming system, according to an embodiment.
FIG. 5 illustrates a flowchart for a process of detecting suspicious activity using DRM license requests, according to an embodiment.
FIG. 6 illustrates a block diagram of an analysis module for analyzing data to determine suspicious subscribers in a content streaming system, according to an embodiment.
FIG. 7 illustrates a block diagram of an analysis module for detecting suspicious activity, according to an embodiment.
FIG. 8 shows a graph of cumulative license requests for all channels over a 12-hour period centered around a key change time, according to an example.
FIG. 9 provides a more detailed view of the number of license requests made per subscriber across the three key change processes, according to an example.
FIG. 10 shows the frequency of DRM license requests made by users over consecutive days when a series key change processes are executed.

Common reference numerals are used throughout the figures to indicate similar features.

### DETAILED DESCRIPTION

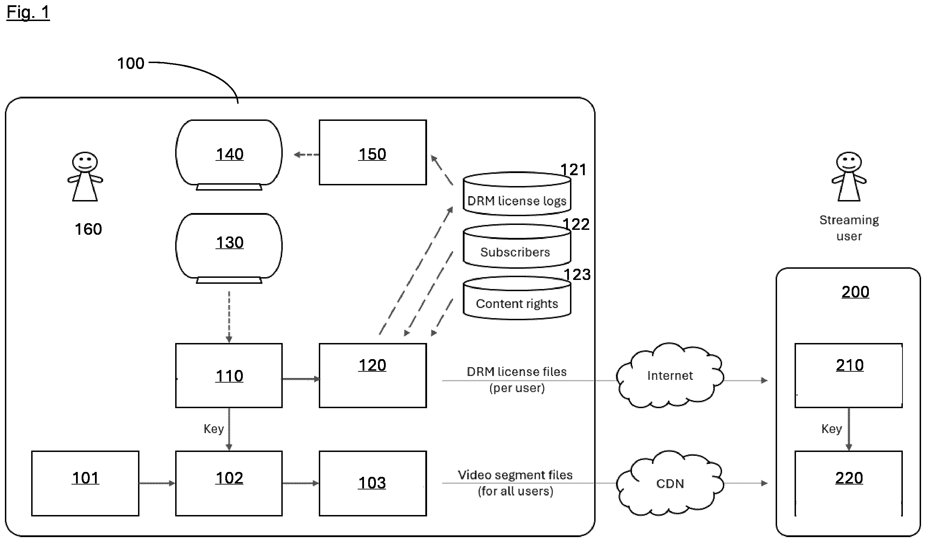

FIG. 1 illustrates a block diagram of a content streaming system 100 for delivering encrypted content to user devices 200 while detecting suspicious subscriber activity, according to an embodiment. The content streaming system 100 may offer a digital content streaming service - for example for TV channels, movies, live events, music, podcasts, and other media contents - to subscribers, also herein referred as users, to a content streaming service provided by the content streaming system. The streaming system 100 comprises several interconnected components that work together to provide secure content delivery and detection of suspicious subscriber activity indicative of DRM exploit(s).

As used herein, the term "DRM exploit" refers to any method, technique, or tool used to bypass, circumvent, or manipulate Digital Rights Management protections, for example in order to extract decryption keys. This may include, but is not limited to, reverse engineering of DRM software, manipulation of license files, exploitation of vulnerabilities in DRM implementations, and/or unauthorized extraction and sharing of content decryption keys.

As used herein, the term "suspicious subscriber activity" refers to patterns of behavior or actions taken by a subscriber that deviate from (expected) normal usage or behavior and may indicate potential unauthorized bypass or manipulation of Digital Rights Management protections on DRM-protected content. In some cases, this behavior or actions may be intended for unauthorized extraction and sharing of content decryption keys. This may include, but is not limited to, license requests for many content keys made at the same time or within a short time period from a key change event, license requests that correlate with known key change events (e.g., immediately after) in ways that suggest automated or programmatic behavior rather than typical user viewing patterns, etc.

The detection of suspicious subscriber activity indicative of DRM exploits refers to the process of identifying and analyzing patterns of behavior or activity that indicate unauthorized access, manipulation, or circumvention of Digital Rights Management (DRM) protections in a content streaming system. In the present disclosure, this process involves monitoring and analyzing DRM license requests and subscriber activities to identify suspicious activities or behaviors associated with a given subscriber, or group of subscribers, that may indicate attempts to bypass content protection mechanisms. Such detection may include automated analysis of monitoring data, application of machine learning algorithms to identify anomalous patterns, and correlation of multiple data points to distinguish between legitimate user behavior and potential piracy attempts, as will be described in more detail later in the description.

The content streaming system 100 typically includes several components for content processing and delivery. These components may include:
- an encoder 101 for encoding or transcoding digital contents,
- a stream packager 102 for preparing contents for distribution in the appropriate formats and/or streaming protocols, which includes encrypting the contents,
- an origin server 103 for storing the encoded and packaged contents and feeding them to content delivery networks, or CDNs, for stream delivery to user devices 200, and
- one or more DRM license servers 120 for generating and delivering DRM licenses, typically DRM license files, containing decryption keys to user devices 200 for example over the Internet.

Each DRM license server 120 may support one or more DRM systems (e.g., Widevine, FairPlay, PlayReady, etc.). The DRM licenses enable user devices 200 to decrypt content for playback. In some aspects, a DRM license may include a decryption key used to decrypt a protected content. To secure this decryption key in the DRM license, it may be encrypted using cryptographic techniques, such as a user-specific or device-specific key. This key can be a symmetric key or a public key associated with a particular user or user device. As a result, the DRM license ensures that the content can only be decrypted on the authorized device or by the authorized user, preventing unauthorized sharing or access. For the sake of clarity, only one DRM license server 120 is shown in figure 1, but the system 100 may include a plurality of DRM license servers 120.

The system 100 may also include a key management module 110. The key management module 110 may communicate with the stream packager 102 and with the DRM license servers 120. The key management module 110 is responsible for:
- scheduling changes of decryption keys, each decryption key being associated with a specific streaming content (e.g., a TV channel, a live streaming event, etc.) and being delivered to user devices 200 within DRM licenses to decrypt the content for playback, enabling scheduling when decryption keys associated with specific streaming contents will be changed; and
- managing key changes: organizing and executing the process of changing the decryption/encryption keys associated with streaming contents, as scheduled. In particular, the key management module 110 communicates with the stream packager 102 to provide encryption keys for encrypting contents, and with the DRM license servers 120 to providing decryption keys to be wrapped within DRM licenses.

The key management module 110 may be implemented using hardware and software components. It can be deployed in a server, a computing device, a cloud system, or any other environments depending on the system requirements.

The system 100 may further include a computing device 130, also referred to as a console, in communication with the key management module 110 and provided with a user interface system. For instance, the computing device 130 may be a computer, a laptop, a tablet, a smartphone, etc. It enables a security operator 160 to interact with the key management module 110, for example to schedule key changes, as will be described later in more detail. It plays the role of a user interface with the key management module 110.

In a particular embodiment, the key management module 110 and the computing device 130 may be combined.

Additionally, a subscriber database 122 and a content rights database 123 may be present in the system 100 to store subscriber information and content rights data, respectively. These databases 122, 123 provide information to the DRM license servers 120.

In the present disclosure, the system 100 comprises additional components that enhance its capabilities for detecting suspicious subscriber (or user) activity. These additional components may include:
- a license request database 121 for storing monitoring data for license requests made by subscribers (or users) using user devices 200 in the streaming system 100,
- an analysis module 150 for detecting suspicious user activity, and
- a computing device 140, also referred as a dashboard or console, provided with a user interface system, acting as a user interface with the analysis module 150.

The license request database 121 acts as a storage module configured to centrally store monitoring data - also referred as log data or record data - for license requests made by users in the streaming system 100, this monitoring data being generated by the DRM license servers 120. The analysis module 150 is configured to analyze the monitoring data, or log data, to detect suspicious activity associated with a given user or subscriber, or with a given group of users or subscribers, as will be described in more detail later.

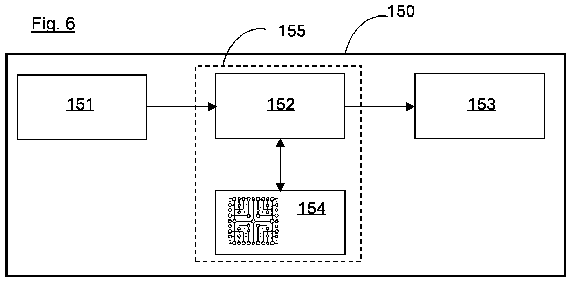

FIG. 6 illustrates a block diagram of the analysis module 150 for analyzing data to determine suspicious subscribers in the content streaming system 100, according to an embodiment.

The analysis module 150 may comprise the following components an input interface component 151, at least one processor 152, a memory 154, and an output interface component 153. It is implemented with hardware and software.

The input interface component 151 is responsible for receiving monitoring data, such as DRM license request logs data, from the database 121. It is also responsible for receiving configuration parameters and instructions for analysis.

The processor 152 is the central component of the analysis module 150, responsible for executing instructions, algorithm(s) and/or machine learning model(s).

The memory 154 is used to store data and instructions used for the operation of the processor 152. It may include both volatile and non-volatile memory elements. In particular, the memory 154 may store the algorithm(s) and/or machine learning model(s) for analyzing the received monitoring data.

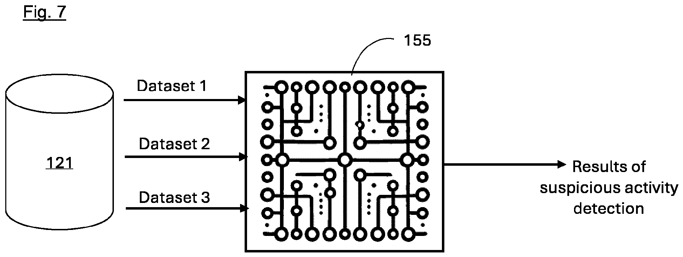

A reference 155 in FIG. 6 and 7 represents an analyzer component 155, which is implemented with the processor(s) 152 and the algorithms and/or machine learnings models stored in the memory 154. It is responsible for acquiring monitoring data, analyzing (or processing) the acquired monitoring data to detect suspicious activity associated with a given subscriber (or user) or a given group of subscribers (or users). It performs the core analysis functions, identifying patterns and/or anomalies in the data that may indicate suspicious activity, as will be described later in more detail. The memory 154 supports the processor 152 by storing data and instructions, ensuring efficient and accurate analysis of the monitoring data to detect suspicious subscriber activity.

The output interface component 153 is responsible for communicating results of the analysis to a security operator 160 via the computing device 140 or to other parts of the content streaming system 100. The output interface component 153 may be responsible for generating reports, visualization dashboards, alerts, and/or countermeasures based on the analysis results, and communicating them to the security operator 160 via the computing device 140 enabling timely and informed decision-making.

The analysis module 150 operates by acquiring monitoring data through the input interface component 151, processing this data using the analyzer component 155, and then outputting analysis results via the output interface component 153.

The analysis module 150 may be implemented using hardware and software components. It can be deployed in a server, a computing device, a cloud system, or any other environments depending on the system requirements.

The computing device 140 is in communication with the analysis module 150. It is provided with a user interface system. For instance, the computing device 140 may be a computer, a laptop, a tablet, a smartphone, etc. It enables the security operator 160 to interact with the analysis module 150, for example to:
- set configuration parameters for analysis;
- enter analysis instructions, and/or
- generate visualizations, dashboards, and/or reports on analysis results, alerts, etc., which are conveyed to a security operator 160 through the user interface system of the computing device 140.

In an embodiment, the two computing devices 130, 140 may be combined into a same computing device.

A user device 200 may receive encrypted contents via content delivery networks (CDNs) and DRM licenses via a communication network for example the Internet. The user device 200 may include a device DRM module 210 and a device player 220. The DRM module 210 manages DRM functions such as DRM license acquisition (for acquiring a DRM license from a DRM license server 120), DRM license management (ensuring that the device 200 complies with usage policies - e.g., time limits, playback rights - defined in the DRM license), and key management (for handling a decryption key included or wrapped in the DRM license). The player 220, for example a video and/or audio player, is responsible for decrypting and decoding the DRM-protected content for playback. In operation, the DRM module 210 provides a decryption key to the player 220.

The streaming system 100 enables secure content delivery while providing tools for detecting a potential suspicious subscriber (or user) activity, that may reveal DRM exploits, through scheduling and management of key changes and license request monitoring and analysis.

In an embodiment, the streaming system 100 may use symmetric encryption, where the same key is used for both encryption and decryption. In this case, the encryption key provided by the key management module 110 to the stream packager 102 may be identical to the decryption key included in the DRM license delivered to user devices 200.

However, the present disclosure may also apply to asymmetric encryption schemes. In asymmetric encryption, two different keys are used-a public key for encryption and a private key for decryption. In such a case, the key management module 110 may provide a public key to the stream packager 102 for content encryption, while the corresponding private key (decryption key) is securely transmitted to user devices 200 via the DRM license for content decryption.

The streaming system 100 may support both symmetric and asymmetric encryption methods, allowing flexibility in implementing content protection based on specific security requirements or compatibility with different DRM systems. The key management module 110 and the analysis module 150 may be configured to handle key changes and detect suspicious activity for both encryption types, adapting their operations accordingly.

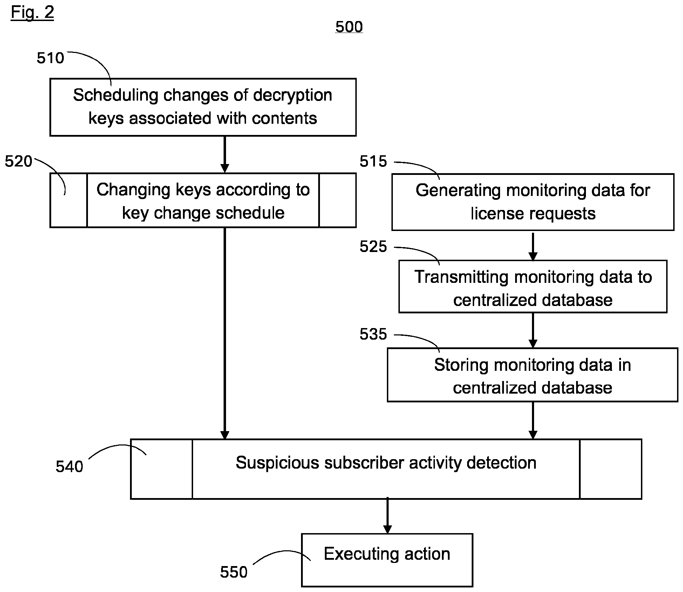

FIG. 2 illustrates a flowchart of a method 500 for detecting a suspicious subscriber (or user) in the content streaming system 100. The method 500 comprises several steps that work together to identify suspicious user activity, indicative of potential DRM exploit(s), by analyzing user behavior in response to key changes based on monitoring the license requests in the streaming system 100.

The method 500 begins with a step 510 of scheduling changes of a plurality of decryption keys, each decryption key being associated with a specific streaming content (encrypted) such as a TV channel or a live streaming event (e.g., a sport event). As previously indicated, the decryption key associated with a specific streaming content is delivered to authorized user devices 200 within DRM licenses so that the user devices 200 can decrypt this specific streaming content for playback. Scheduling changes of a plurality of decryption keys may refer to the process of:
- organizing and planning when the decryption keys will be changed, for example within one or more specified time frames or time intervals, and
- selecting the specific streaming contents associated with the decryption keys that will be changed.

The computing device 130 may enable a security operator 160 to schedule the changes of a plurality of decryption keys via its user interface system. A result of this scheduling 510 may include a key change schedule or execution plan specifying the selected streaming contents associated with the decryption keys that will be changed and when these decryption keys will be changed.

The step 510 of scheduling key changes can be performed manually by a security operator 160 through the computing device 130, as above described. However, this step 510 may also be performed automatically, or at least partially automatically, by a scheduler. This scheduler can be implemented as a component within the key management module 110.

The scheduler's primary function is to automatically plan and organize the changes of a plurality of decryption keys without requiring manual intervention. To accomplish this, the scheduler may employ various algorithms to determine optimal times for key changes. These algorithms may take into account factors such as historical data on system usage patterns, predicted audience sizes at different times of day, scheduled events or programming, system load, etc. The scheduler may also interface with other components of the content streaming system 100, such as the analysis module 150, to incorporate feedback from previous key change operations and adjust future schedules accordingly. This adaptive approach allows the system 100 to refine its key change strategy based on observed patterns and detected suspicious activities.

While operating automatically, the scheduler may still allow for manual instructions by the security operator 160, providing a balance between automation and human control.

By automating the scheduling process, the content streaming system 100 can potentially improve its ability to detect and mitigate DRM exploits while optimizing system performance and user experience.

The method 500 then proceeds to a step 520 of changing a plurality of decryption keys as scheduled, i.e., in accordance with the key change schedule generated in the step 510. The step 520 may be performed automatically by the key management module 110, based on the predetermined key change schedule As previously indicated, the decryption keys are delivered to authorized user devices 200 within DRM licenses to decrypt the streaming content for playback.

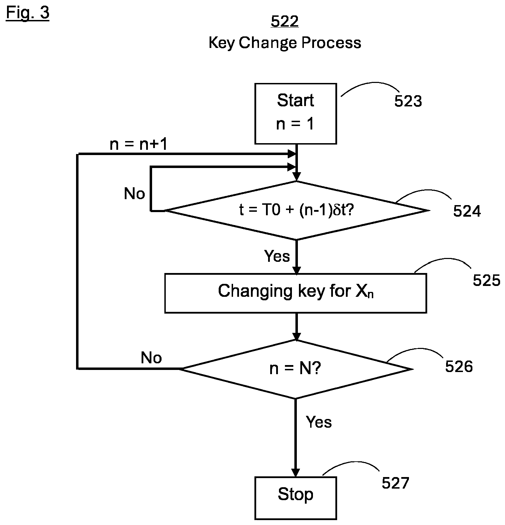

In an embodiment, this step 520 may include an operation, or process, 522, illustrated in more detail in FIG. 3, of modifying a plurality of decryption keys k1, k2, ..., kN respectively associated with a plurality of selected streaming contents X1, ..., XN, over a scheduled first time interval P, also referred as a key change time interval. This interval of time P may be defined by a start point T0 and a duration ΔT (or an end point). It is advantageously a short time interval with the duration ΔT being set below a predefined threshold, for example below a maximal duration of three hours. For example, ΔT may be set around 1 hour. As will be described later, in case the plurality of decryption keys k1, k2, ..., kN are successively changed within the first time interval P with a small time shift δt between each change of key, the duration ΔT may depend on the number N of selected streaming contents.

In an embodiment, the selected streaming contents X1, ..., XN may be contents being concomitantly streamed during this key change time interval P. For example, the selected streaming contents X1, ..., XN comprise different TV channels and/or live streaming event(s).

The number N of selected streaming contents X1, ..., XN whose decryption keys are changed within the key change time interval P may be above a predetermined threshold, for example above 10, preferably above 20, more preferably above 30.

All the decryption keys k1, k2, ..., kN respectively associated with the selected streaming contents X1, ..., XN may be changed at the same time (i.e., at the same point in time) within the key change time interval P. In that case, the time interval P may be reduced to the time point T0 (in other words, ΔT=0) when the decryption keys for all the selected contents X1, ..., XN are changed.

Alternatively, the decryption keys k1, k2, ..., kN respectively associated with the selected streaming contents X1, ..., XN may be changed at different points in time (i.e., at different times) within the key change time interval P, to avoid a peak in license requests in response to the key changes. For example, the changes of keys can be distributed evenly during the key change time interval P, with a given time shift δt (e.g., 30 seconds or 1 minute) between each key change.

FIG. 3 illustrates a flowchart of the operation or process 522 for successively changing the decryption keys k1, k2, ..., kN respectively associated with the N different streaming contents X1, ..., XN within the specified first time interval P starting at time T0 and having the duration ΔT in the streaming system 100, according to an embodiment. The process 522, referred as "Key Change Process", can be initialized with n = 1, where n is a content index with 1≤n≤N, at step 523. The process 522 then proceeds to a step 524, which checks if the current time t is equal to T0 + (n-1)δt, where T0 is the start point of the key change time interval P and δt is a specified time shift. This time shift δt allows for a staggered approach to key changes that involves changing the keys for different contents sequentially, with a predetermined time shift between each key change. By implementing a staggered approach, the system can manage the load on its infrastructure more effectively, avoiding potential constraints that could occur if all keys were changed simultaneously. This method may also allow for a more controlled and organized process of changing keys, enabling the system to monitor and analyze user behavior in response to each individual key change more precisely. The staggered approach can be particularly beneficial when changing keys for a large number of streaming contents, as it distributes the associated processing and network load over time, potentially reducing the risk of system overload or service disruptions. If the condition in the step 524 is not met, the process 523 loops back to the step 524. If the condition is met, the method 523 moves to a step 525, where the decryption key kn associated with the streaming content Xn is changed. After changing the key kn for Xn, the process 522 proceeds to a step 526, which checks if n equals N. If n is not equal to N, the process 522 increments n by 1 and loops back to the step 524. If n equals N, the process 522 proceeds to a step 527, where the process 522 stops.

In an embodiment, the key change time interval P may be scheduled within a period of time when the number of active subscribers in an expected audience (e.g., the cumulated audience for all the TV channels of the streaming service) is low, i.e., below a predetermined first audience threshold TSH1 (e.g., 1% of the total number of subscribers to the streaming service). As an illustrative example, the key change time interval P may be scheduled during the night, when the expected audience is low, for example at 03:00 AM or 04:00 AM as start point T0.

Alternatively, the key change time interval T may be scheduled within a period of time when the number of active subscribers in an expected audience is high, i.e., above a predetermined second audience threshold TSH2 with TSH2>TSH1 (e.g., 5% of the total number of subscribers to the streaming service), for example during streaming of a live streaming content, such as a popular sport event, with an expected peak audience. In this case, prior to changing a current decryption key associated with this live streaming content into a new decryption key, both the current decryption key and the new decryption key may be wrapped in a same DRM license delivered to authorized user devices 200 within a pre-delivery period (preceding the effective time of changing the decryption key). In this way, the system may force a spreading of the license requests for licenses including the new decryption key over a period of time starting before the effective change of the decryption key associated with the live streaming content. This mechanism allows to manage the potentially significant load of license requests during peak audience times and avoid overwhelming the DRM license servers 120 with simultaneous license requests. For instance, when scheduling a key change during a live streaming event with a large expected audience, the system 100 may distribute both the current and new decryption keys over the pre-delivery period, for example 10 minutes, prior to the effective key change. This distribution may be based on when each user begins watching the streaming content. When a user starts viewing the streaming content, it may send a license request to the DRM license server 120. For example, if 1 million users are watching a live sports event, their license renewal times may be staggered based on when they started viewing. For example, users who began watching 10 minutes before the event, those who joined at kick-off, and those who started watching 5 minutes after start of the event may have their license renewals distributed accordingly. The approach of pre-delivering the new decryption key with the current key may allow the system to spread the distribution of the new decryption key and handle a large number of DRM license requests without exceeding its capacity. For instance, 1 million viewers may have their license renewals distributed over a 10-minute period. By implementing this spreading mechanism, the system may optimize its performance and realistically implement key changes even during periods of high audience. The specific duration of the pre-delivery period may vary depending on the system's requirements and capabilities. It could be, for example, 5 minutes, 10 minutes, 15 minutes, or any other appropriate duration adapted to the system requirements.

As previously indicated, the scheduling of key changes may be performed either upon instruction of the security operator 160 or automatically by the scheduler in the key management system 110. The streaming system 100 can thus be enhanced with an automatic scheduling capability to optimize the execution of key change processes.

For automatic scheduling, a forecasting component within the streaming system 100 may be designed to predict periods of low and high subscriber activity. This prediction may allow to determine the most suitable times to execute key change processes 522. The forecasting model may employ advanced machine learning techniques or other algorithms, such as similarity analysis based on vector analysis or classification methods. The forecasting model may take into account a wide range of factors to predict subscriber activity levels over time. These factors include, but are not limited to: TV program schedules, specific events, particularly live sports events, holidays and seasonal variations, typical peak and off-peak activity times. The forecasting model may be trained using a training dataset. This training dataset may comprise for example real-world historical audience data, specifically the number of active subscribers at various times. Additionally, it may incorporate metadata related to streaming contents to provide context and improve prediction accuracy. The training data is collected over extended periods and under diverse circumstances, including different days of the week, various seasons, and during specific high-interest events like major sports broadcasts. Once trained, the forecasting model becomes a tool for predicting subscriber activity levels in a variety of scenarios. It can forecast audience sizes during future events such as live sports broadcasts or premiere episodes of popular shows. Moreover, it can identify periods of consistently low activity, such as late-night hours. By integrating this forecasting capability, the streaming system 100 can automatically schedule key change processes 522 to coincide with predicted periods of low subscriber activity or with predicted periods of high subscriber activity. As the system continues to collect and analyze data over time, the forecasting model can be periodically retrained and refined, further improving its predictive accuracy and the overall effectiveness of the streaming system's security protocols.

In some aspects, if one or more subscriber accounts are flagged as suspicious for example based on outcome of the module analysis 150, these accounts can be suspended or blocked prior to executing the key change process 522 at peak time on a given TV channel. This can be done by an entity of the content streaming system 100, such as the Subscriber Management System that is a backend system handling subscriber accounts and service authorization, either automatically for example upon feedback from the module analysis 150 or manually upon instructions of the security operator 160. This increases the likeliness of disrupting the pirate service operations while maintaining efforts for detecting any potential suspicious subscriber activity, that may reveal DRM exploits.

In some embodiments, the step 520 may comprise a series of key change processes 522, each key change process 522 comprising changing a plurality of decryption keys respectively associated with a plurality of selected streaming contents as previously described with reference to FIG. 3. In other words, the key change process 522 may be repeated several times, over different specified first times intervals referred as P₀, P₁, P₂, ... The series of key change processes 522 respectively start at different start times T0₀, T0₁, T0₂, ... and are respectively executed within different key change time intervals P₀, P₁, P₂, ... Repeating the process 522 of changing the decryption keys associated with a set of selected streaming contents several times at different points in time T0₀, T0₁, T0₂, ... (e.g., over consecutive days) may reduce or eliminate the risk of false positives. A false positive is a subscriber or user that is suspected of being a pirate executing DRM exploits while in fact it is a normal user. By performing multiple key change processes 522 over time, the system 100 can gather more data points on user behavior within different time frames, potentially allowing for more accurate detection of truly suspicious activity versus normal usage patterns. This series of key change processes 522 can be automatically performed by the key management module 110 executing for example the predetermined key change schedule or execution plan.

Optionally, the set of selected streaming contents may be different for each execution of the key change process 522 in the series to improve the accuracy of the detection. A duration ΔTi of each key change time interval Pi, with i=0, 1, 2, ..., may depend on the size of the set of selected contents. In some cases, a larger set of selected contents may require a longer duration ΔTi to allow sufficient time for changing all the associated decryption keys. Conversely, a smaller set of selected contents may allow for a shorter duration ΔTi. This relationship between the duration and the number of selected contents may help optimize the key change process while maintaining system efficiency.

As an illustrative and non-limitative example, the step 520 of changing decryption keys comprises a series of three key change operations 522 enabling to change the decryption keys of three sets of selected streaming contents respectively within three distinct time intervals P₀, P₁, P₂ starting at three different points in time T0₀, T0₁, T0₂ (for example different dates and same time or different times). For example, the decryption keys of a first set of 50 TV channels may be changed during a first time interval P0 of 25 minutes starting at 3 AM on Monday, the decryption keys of a second set of 80 TV channels may be changed during a second time interval P1 of 40 minutes starting at 3 AM on Wednesday, and the decryption keys of a third set of 60 TV channels may be changed during a third time interval P2 of 30 minutes starting at 4 AM on Sunday, etc.

The series of key change processes 522 may comprise at least two key change processes 522 starting at different times, preferably three or more consecutive key change processes 522 starting at different times. In some aspects, this number of processes 522 in the series may be adapted to reduce or eliminate the risk of false positives. It may also depend on the size of the sets of selected streaming contents used for the key change operations 522.

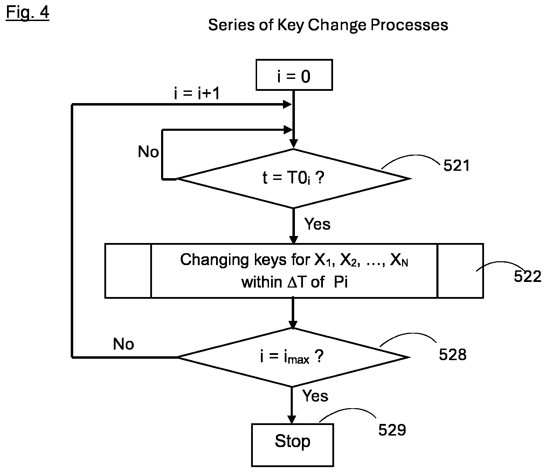

FIG. 4 illustrates a flowchart for a series of key change processes 522, according to an embodiment. The method may begin with initializing a process index i to 0. The method then enters a loop, starting with a step 521 that checks if the current time t is equal to T0ᵢ , where T0ᵢ represents the start time of the process 522 of index i. If the condition t= T0; is not met, the method 520 loops back to the step 521. When the condition t = T0; is met, the method 520 moves to the step 522, where the decryption keys k1, k2, ..., kN associated with the set of streaming contents X1, X2, ..., XN are changed as previously described. In an example, the plurality of keys associated with the different streaming contents may be changed at the same time within the key change time interval ΔT of Pi, for example at time T0ᵢ. Alternatively, the keys may be changed at different times within the key change time interval ΔT of Pi, for example as described with reference to FIG. 3. This approach may help distribute the load on the DRM license server 120 and avoid potential system overload. After changing the keys associated with the streaming contents X1, X2, ..., XN , the method checks if i has reached a maximum scheduled value imax at step 528. If i is not equal to imax, the method 520 loops back to increment i and repeat the cycle. This loop structure allows for a series of key change processes to be executed at predetermined times T0, T1, ... If i equals imax, the method 520 moves to a step 529, which indicates the end of the key changing method 520.

To implement the scheduled changes of decryption keys, the key management module 110 may automatically perform the following actions:
- transmit the new decryption keys to the DRM license servers 120, enabling them to include these new decryption keys in the DRM license files generated and delivered to user devices 200 for the associated streaming contents;
- transmit the corresponding new encryption keys to the stream packager 102, allowing it to encrypt the associated streaming contents being packaged for delivery.

The key management module 110 may execute these actions in accordance with the key change schedule generated in the step 510. In some aspects, the timing of these actions may be coordinated to ensure smooth transitions between old and new keys.

The streaming system 100 may observe and keep track of DRM license requests that are made by user devices 200 to the DRM license servers 120 in the streaming system 100. With reference to FIG. 2, in a step 515, the DRM license servers 120 may generate tracking or monitoring data, also referred as a license request logs or license request records, for the DRM license requests made by users or subscribers (with devices 200) to obtain a license for enabling decryption of a given content on a given authorized device. For instance, the DRM license servers 120 may generate monitoring data for each request or for each delivery of a given DRM license file to a given user. In a step 525, the DRM license servers 120 transmit the generated monitoring data (or log data) to the centralized license database 121. This transmission may be continuously performed in real-time, or with a certain delay. The license database 121 may then store the license request monitoring data (or log data), in a step 535. The monitoring data, or log data, may include, for each license request made by a given user or subscriber to access a specific streaming content, at least part of the information below:
- content information (e.g., content ID of the specific content),
- license information (e.g., type de DRM system (e.g., Google Widevine, Microsoft PlayReady, Apple FairPlay))
- requestor information (e.g., subscriber ID, user ID, http user-agent, and/or geolocation data),
- device information (e.g., device ID, device type, IP address, etc.),
- timing information (e.g., timestamp such as date and time the license was requested and/or delivered), and
- optionally, request status information (e.g., http status information, information on whether the license was delivered or not and, if the license was denied, details on why).

In a variant, the monitoring data, or log data, may be generated only for delivered licenses.

The license database 121 serves as a centralized repository for storing monitoring data, or log data, for all the DRM license requests made across the content streaming system 100. This centralized approach to storing monitoring data for license requests in the database 121 may allow for efficient retrieval and analysis of license request or license delivery patterns across the entire streaming system 100, potentially facilitating the detection of suspicious activities by enabling comprehensive analysis of subscriber behavior in relation to key changes and license requests.

As used herein, the term "key changes" refers to the process of modifying encryption and decryption keys respectively associated with specific streaming contents in the content streaming system 100. This process involves replacing existing keys with new keys to maintain the security of the content being streamed. The term encompasses both the process of changing the keys and the specific instances when these changes occur.

As used herein, the phrase "in relation to" when referring to analyzing license request behavior in relation to key changes means examining the temporal and quantitative correlations between license requests made by subscribers (or users) and the key changes in the content streaming system 100. This includes, but is not limited to:
- Analyzing the timing of license requests relative to scheduled key change intervals;
- Examining patterns in the number and frequency of license requests made by a subscriber or group of subscribers after key changes and optionally before,
- Evaluating consistencies or anomalies in license request behavior across multiple key change operations;
- Assessing correlations between the specific streaming contents affected by key changes and the contents for which licenses are requested.

The analysis of license request behavior "in relation to" key changes aims to distinguish between normal subscriber activity or behavior and potentially suspicious patterns that may indicate unauthorized access attempts or digital rights management (DRM) exploits.

The steps 515, 525 and 535 of generating and centrally storing monitoring data or log data in the database 121 may be performed continuously. Therefore, the monitoring for license requests may be performed before, during and after the key changes. By monitoring the license requests made by users in the streaming system 100, the system 100 may be able to detect any suspicious patterns or anomalies in subscriber or user behavior that could indicate potential DRM exploits, as explained later.

The method 500 further includes a process 540 for detecting suspicious subscriber or user activity in the streaming system 100 based on the monitoring for DRM license requests. The process 540 aims to detect a suspicious activity from at least one subscriber by analyzing a license request behavior of said at least one subscriber in relation to the key changes, based on the monitoring data, as will be described in more detail below.

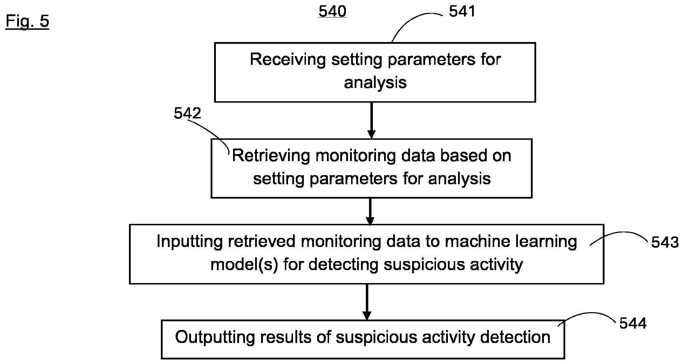

FIG. 5 illustrates a flowchart of the process 540, according to an embodiment. This process 540 may be performed by the analysis module 150. It may comprise steps 541 to 544 described below.

In the step 541, the analysis module 150 may receive configuration or setting parameters for the analysis, for example entered by the security operator 160 through a user interface system of the computing device 140 or automatically transmitted by the key management module 110 (e.g., by its scheduler).

The configuration parameters for analysis may include at least one reference time Tref for analysis. This reference time Tref may correspond to the start time T0 of the key change time interval P (first time interval), when the process 522 for changing keys was initiated.

The configuration parameters for analysis may further include an analysis time interval P' (second time interval) relative to the reference time Tref. The analysis time interval P' may have a duration D1 (first predetermined duration) starting from the reference time Tref and extending after this reference time Tref. In addition, and optionally, the time interval P' for analysis may have another duration D2 (second predetermined duration) prior to this reference time Tref (i.e., extending prior to Tref and ending at this reference time Tref.) Since Tref=T0, the second duration D2 is before start T0 of the first time interval P. This second duration D2 may be less than the first duration D1. In other words, the time period for analysis may be set from Tref - D2 to Tref + D1, where Tref may be the start time T0 when the key change process 522 was initiated. In some aspects, D2 is less than D1 (D2<D1). For example, D1 may be 4 hours, while D2 may be 1 hour.

In a variant, the durations D1 and D2 may be preconfigured in the analysis module 150 and the time period for analysis P' (second time interval) may be automatically set from Tref - D2 to Tref + D1, based on the time Tref.

The duration D1 may be adapted to cover the duration ΔT of the first time interval P for key changes and extend after this first time interval P over a limited duration. This adaptation may allow for comprehensive analysis of subscriber behavior both during and shortly after the key change process.

The time D2 may be adapted to cover a pre-delivery period for delivering a new decryption key in advance, before the effective time for changing the key. This pre-delivery period may enable the system to distribute new keys to authorized users before the actual key change occurs, potentially reducing the load on the DRM license servers during the key change process.

By adjusting D1 and D2, the system 100 may optimize its analysis window to capture relevant user behavior patterns associated with key changes and potential DRM exploits.

In some aspects, when a series of key change processes 522 has been executed in the step 520, the analysis module 150 may receive configuration or setting parameters for the analysis, comprising different reference times Tref₀, Tref₁, Tref₂, ... for analysis. These points in time Tref₀, Tref₁, Tref₂, ... may correspond to the start times T0₀, T0₁, T0₂, ... of different key change time interval P₀, P₁, P₂, ... (first time intervals) of the series. In that case, the analysis module 150 may set different second time period P'₀, P'₁, P'₂, ... for analysis from Tref₀ - D2 to Tref₀ + D1, from Tref₁ - D2 to Tref₁ + D1, from Tref₂ - D2 to Tref₂ + D1, ... In some cases, an analysis may be set for only part of the key change processes of the series.

In another embodiment, the step 541 may include receiving the key change schedule, generated in the step 510, for example from the key management module 110, and automatically setting the parameters for analysis based on this key change schedule.

In the step 542, the analysis module 150 may retrieve monitoring data or log data, stored in the license database 121, based on the set parameters for analysis (e.g., Tref - or Tref₀, Tref₁, Tref₂, ... - and D1, D2). The retrieved monitoring data may correspond to license requests made during the second time interval P' for analysis - or during each of the series of second time intervals P'₀, P'₁, P'₂, .... In some aspects, this may allow the system to focus on the most relevant data for detecting potential suspicious activity related to the key changes.

In the step 543, the process may input the monitoring data or logs within retrieved from the license database 121 into the analyzer component 155. This analyzer component 155 may be designed to detect suspicious activity of at least one subscriber or user (i.e., of one given subscriber or of one given group of subscribers) by analyzing the monitoring data for license requests relative to the key changes. It may include one or more machine learning models or algorithms running on at least one processor 152. The analysis is performed based on the monitoring data (or log data) for license requests made within the time interval P' - or during each of the second time intervals P'₀, P'₁, P'₂, .... - set for analysis to focus on relevant data.

As an illustrative and non-limitative example, FIG. 7 shows that three datasets of monitoring data, respectively corresponding to the monitoring data for license requests made during the second time intervals P'₀, P'₁, P'₂, are provided by the database 121 are inputted into the analysis component 155 for processing or analysis.

The machine learning models may be designed to identify patterns in license request behavior for an identified subscriber - or for an identified group of subscribers - that deviate from expected normal user behavior (such as occasional channel switching or zapping which refers to the action of quickly changing channels or selecting different content streams) and adhere to known piracy behavior (such as abnormally high frequency or numbers of license requests immediately following key changes or with a consistent delay after key changes, consistent patterns of requests across multiple key change processes initiated at different dates/times that suggest automated or programmatic behavior, etc.).

The machine learning models used in the detection module 155 may be designed to search for outliers or perform anomaly detection on time series data (e.g., DRM licenses delivered over time to a given user). These models may analyze DRM license request or delivery patterns over time for given users, or groups of users, to identify suspicious behavior.

The input to these models may include the monitoring data or log data for license requests, as previously described. For example, in a log file including a plurality of rows, each row may represent the delivery of a specific DRM license file to a particular user (i.e., the license file for a given content like a given TV channel and for a given user device).

The output of the machine learning models (155) may include:
- Detection of suspicious or rogue cases (users or groups of users) with high confidence (probability) exceeding a first high threshold (i.e., with a low risk of false positives);
- Detection of suspicious cases (users or groups of users) with a medium confidence value that is less than the first high threshold but higher than a second low threshold (i.e., with some risk of false positives), that may need further investigation.

Optionally, the output of the machine learning models (155) may also be used by the security operator 160 or by the scheduler of the key management module 110 to schedule future key changes. For example, if suspicious cases with a medium confidence value have been identified, the security operator 160 or the scheduler (automatically) may schedule one or more key change processes 522 for further investigation.

The models may employ supervised, semi-supervised, or unsupervised training approaches depending on the specific implementation and available labeled data.

By analyzing patterns in license requestor behavior relative to key changes, these models aim to distinguish between normal subscriber behavior and potentially suspicious activity that may indicate DRM exploits.

The machine learning models may be trained using real-world data where pirates have been identified. This training process allows the models to learn patterns associated with suspicious behavior and improve their accuracy in detecting potential DRM exploits.

The training process for these machine learning models may use real-world data that has been qualified and labeled, including data where pirates have been identified. This labeled data is used to train, test, and validate various machine learning models. The goal is to develop models that can effectively distinguish between normal subscriber behavior and potentially suspicious activities associated with DRM exploits.

The training process may involve achieving at least part of the following actions:
a. data collection: collecting real-world data from the content streaming system, including DRM license request logs (or monitoring data) related to license requests made by normal subscribers and license requests made by piracy systems in the streaming system 100.
b. data labeling: qualifying and labelling the collected data with piracy labels or normal subscriber labels.
c. model selection: choosing appropriate machine learning algorithms that can effectively analyze the labeled data and detect patterns indicative of suspicious activity.
d. training: using the labeled data to train multiple machine learning models, adjusting parameters to optimize performance.
e. testing and validation: evaluating the trained models using a separate set of labeled data to assess their accuracy in detecting suspicious activity.
f. deployment: implementing the best-performing model(s) in the analysis module 150 for analysis of subscriber behavior.
g. continuous learning: regularly updating the models with new data to adapt to evolving piracy techniques and maintain detection effectiveness.

By using labeled real data to train and validate the models, the system can ensure that the machine learning approach produces results consistent with expected outcomes and performs more effectively than simple threshold-based detection methods.

Alternatively or additionally, some algorithms may be used to analyze factors like measures, criteria or parameters (e.g., a number of license requests made by a same user or a same group of users within a second time interval P', or P'₀, P'₁, P'₂, ...) determined or computed based on the monitoring data relative to predetermined thresholds, where the thresholds may allow discrimination between an expected normal subscriber behavior and a potential piracy behavior. For example, the thresholds may be set based on statistical analysis of historical license request monitoring data for normal users versus known piracy attempts. In some aspects, the thresholds may account for factors such as the number of different content keys requested within a given time period, the timing of requests relative to key changes, and any recurring patterns across multiple key change operations. In a variant, some algorithms may be used to compare a count of license requests for example per day between days without key changes and days with key changes.

To illustrate the key change scheduling and detection of suspicious subscriber activity, let's consider an example involving three key change campaigns (or processes) conducted on consecutive days - October 31, November 3, and November 4. These key change campaigns are scheduled during periods of low audience, specifically around 3 AM or 4 AM, with slightly different rotation times for each channel to distribute the load on the DRM license servers.

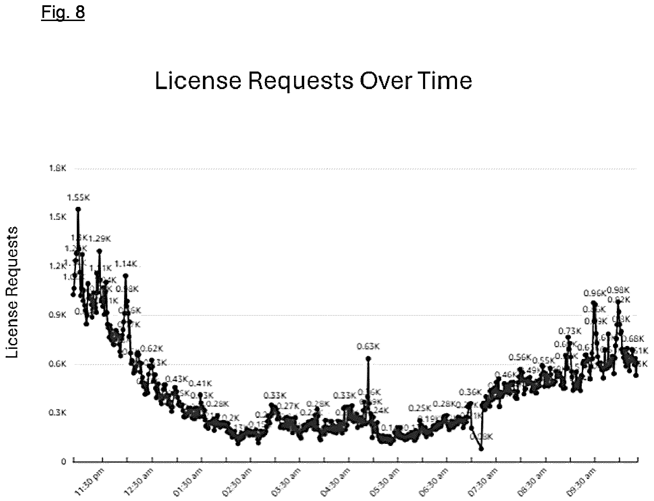

FIG. 8 shows the cumulative license requests for all channels over a 12-hour period centered around the key change time on October 31. Prior to the key change time, the number of license requests decreases as fewer viewers are active. Shortly after the moment of key change, there is a sharp peak in license requests. Following this peak, the number of requests gradually increases as viewers begin their day, returning to normal levels by around 7 AM.

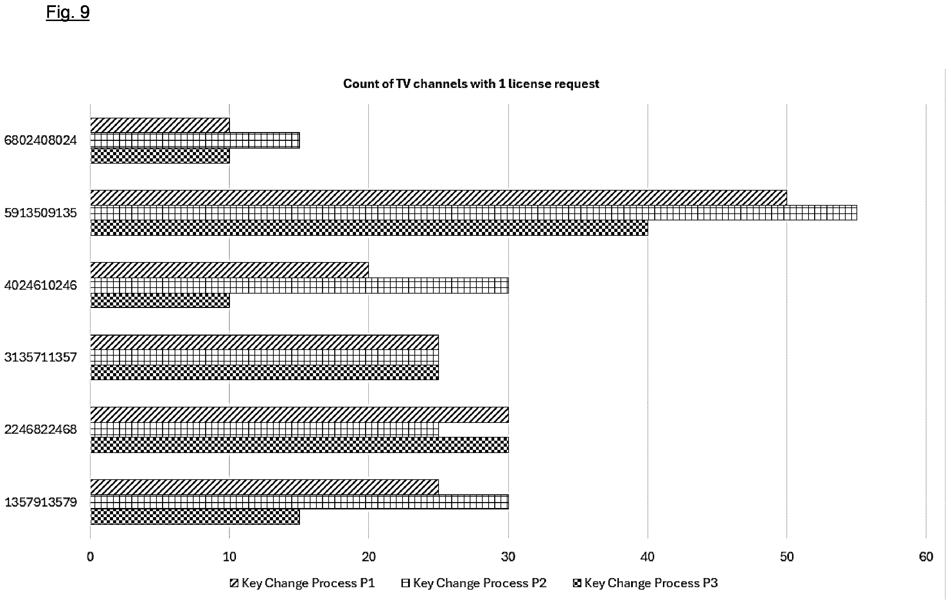

FIG. 9 provides a more detailed view of subscriber behavior across the three key change campaigns. For each subscriber ID, the graph displays the number of DRM licenses requested or delivered following each campaign, for example within the time window post-key changed previously described, using distinct row for each campaign. The key changes affected different numbers of channels in each campaign:
- First campaign (October 31): 50 channels out of 200
- Second campaign (November 3): 55 channels out of 200
- Third campaign (November 4): 40 channels out of 200

Of particular interest in Figure 9 is a subscriber (subscriber n°2 '5913509135') who requested 50, 55, and 40 licenses during campaigns 1, 2, and 3 respectively. This pattern of behavior, consistently requesting licenses for all affected channels immediately following each key change campaign, is highly suspicious and may indicate potential DRM exploit activity.

However, pirates may attempt to evade detection by distributing their activities across multiple subscriptions, typically using 2 or more accounts. To address this challenge, machine learning techniques can be employed to detect correlations between key change patterns and license requests for single users (or single subscribers) or groups of users (or groups of subscribers).

For example, with reference with Figure 9, consider a scenario where two pirates each use two subscriptions, and the decryption keys of 50, 55, and 40 TV channels are changed respectively during campaigns 1, 2, and 3 respectively. In this case, the cumulative number of licenses requested by subscribers 3 (`4024610246') and 5 ('2246822468') together, and separately by subscribers 4 ('3135711357') and 6 ('1357913579'), may correspond to the total of affected channels in each campaign. This pattern, while more complex, still indicates suspicious activity that can be identified through advanced analysis, using for example machine learning techniques.

It's important to note that pirates may specialize in specific types of channels, such as sports channels, rather than targeting the entire list of channels. Therefore, the detection system may be capable of identifying various piracy scenarios and patterns of suspicious behavior across different channel subsets.

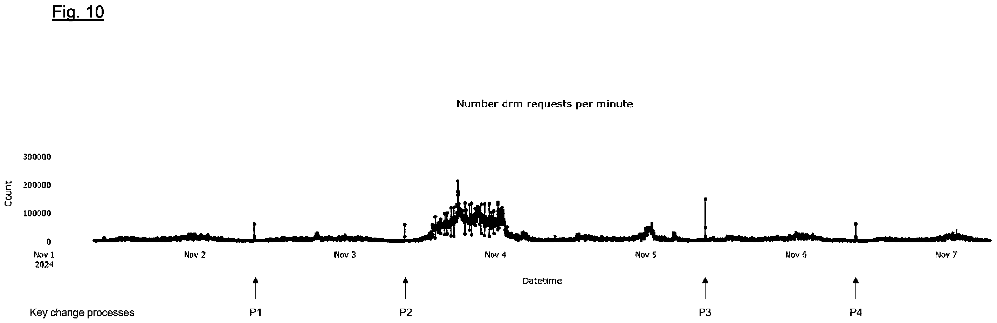

FIG. 10 shows the frequency of DRM license requests made by users in the system 100 over consecutive days, one key change process 522 being executed per day within a scheduled key change time interval P₀, P₁, ... as previously described. The figure clearly shows a peak of license requests per day in relation to the key changes (i.e., in relation or correlated to the time, or time interval, when the plurality of decryption keys associated with a set of contents are changed).

By analyzing these complex patterns and correlations, the streaming system 100 can more effectively identify potential DRM exploits and unauthorized content access attempts, even when pirates employ sophisticated techniques to avoid detection.

By utilizing machine learning algorithms and analyzing patterns in license requests in relation to scheduled key changes, the system can effectively determine suspicious activity based on the monitoring data or logs related to license requests stored in the database. This approach allows for more sophisticated and adaptive detection of potential DRM exploits compared to simple rule-based systems.

The analysis module 150 may be designed to detect a suspicious user or subscriber activity for the following use cases or patterns that are only given as illustrative and non-limitative examples:
1) A plurality of decryption keys for a large number of contents such as channels (e.g., more than a given threshold) are requested immediately after changing the keys. This pattern may indicate an automated system attempting to quickly obtain new decryption keys for numerous channels as soon as they become available.
2) A plurality of decryption keys for a large number of contents such as channels (e.g., more than a given threshold) are simultaneously, or almost simultaneously, requested with a delay after changing the keys, this delay being within the second time interval P' for analysis. Such behavior could suggest a coordinated effort to acquire multiple keys at once, potentially to avoid immediate detection while still obtaining keys for numerous channels.
3) A plurality of decryption keys for different contents like channels are requested at the same time or in a specific sequence, possibly with a delay after changing the keys during a key change time interval P₀, and again for example the next day after changing the keys during another key change time interval P₁. This repetitive pattern across multiple time frames, for example across multiple days, may indicate a systematic approach to key acquisition that is unlikely to represent normal viewer behavior.
4) A plurality of decryption keys for a first part of the channels are requested at the same time or in sequence, possibly with a delay, by a first user, after changing the keys during a key change time interval P₀, and then a plurality of decryption keys for a second part of the channels are requested at the same time or in a similar sequence, possibly with a delay, by a second user, for example the next day after changing the keys during another key change time interval P₁. This scenario could suggest coordinated activity between multiple users or accounts (here two users, but more than two users could be involved) to distribute key requests across different subscriptions, potentially to avoid detection while still obtaining keys for a large number of channels.

In some cases, the analysis module 150 may encounter scenarios where it cannot immediately determine if an activity is suspicious or not. For instance, when a key is requested for a single channel immediately after changing the key (e.g., key change time t1 and license request time t2 < t1 + 5 seconds), the analysis module 150 may not have sufficient information to qualify the behavior as suspicious or normal based on a single occurrence.

It is important to note that a typical or normal user often experiences a delay when switching (or zapping) between channels. Additionally, the DRM module 210 of the user device 200 automatically sends a license request to the DRM license server 120 whenever the decryption key for the currently viewed TV channel on the device player 220 changes (or immediately following the key change), unless the decryption key has already been provided during a pre-delivery period. To achieve a more accurate detection in such cases, the system may repeat the key change process 522 and analyze the subscriber's behavior in relation to multiple key changes over time. By observing the subscriber's response to repeated key changes, the analysis module 150 may be able to identify consistent patterns that could indicate suspicious activity. If the analysis determines a consistent pattern of requesting the new key in a repeated manner immediately after changing the key, the analysis module 150 may qualify the subscriber's behavior as potentially suspicious. This repeated behavior may suggest automated or programmatic attempts to obtain new keys as soon as they become available, which could be indicative of unauthorized access attempts or DRM exploits. On the other hand, if no such consistent pattern can be found across multiple key change events, the analysis module 150 may qualify the subscriber's behavior as normal. In this case, the immediate key request after a single key change may have been coincidental or due to legitimate user activity.

By incorporating this approach of analyzing behavior across multiple key change events, the system may enhance its ability to distinguish between normal subscriber activity and potentially suspicious behavior, reducing the risk of false positives and improving the overall accuracy of the detection process. These use cases represent patterns of behavior that deviate from expected normal subscriber or user activity and may indicate potential DRM exploits or unauthorized content access attempts. The analysis module 150 may be configured to identify and flag such patterns for further investigation or action.

In a step 550, the analysis module 150 may output the results of the analysis, including for example users or subscribers identified as suspicious or rogue with high confidence and users or subscribers identified as suspicious with medium confidence, as previously explained. These results may be communicated to the security operator 160 via the computing device 140, which may generate visualizations, dashboards, and/or reports to present the analysis outcomes.

Optionally, upon execution of a given key change process 522, the analysis module 150 may automatically run a processing and create a dashboard based on, for example, the last 3 occurrences of key change processes, for a predefined set of TV channels and a predefined duration around the T0 of each key change process.

Based on the analysis results, the streaming system 100 may take various actions to address potential DRM exploits:
- For subscribers identified as suspicious with high confidence, the system 100 may choose to block or suspend the associated subscriptions or accounts in the subscriber database 122 (this can be done by the Subscriber Management System), and/or compile data to build a legal case against the suspected pirate.
- The system 100 may generate a list of subscribers confirmed or strongly suspected as sources of DRM exploits. This restriction list can be used to apply targeted measures during future key changes or other security operations.
- The system 100 may flag suspicious subscribers for enhanced monitoring, allowing for more detailed analysis of their behavior during subsequent key change processes.
- Insights gained from the analysis may be used to improve and refine the machine learning models and/or algorithms for detection suspicious activity, enhancing the system's ability to identify suspicious activity in the future.

Based on the patterns of suspicious activity detected, the key management module 110 may modify or adjust the key change schedule or strategy, either automatically or upon instructions of the security operator 160, to make it more effective in detecting rogue users and/or revealing potential DRM exploits.

By implementing these actions, the streaming system 100 can respond proactively to potential threats, continuously improve its security measures, and maintain the integrity of its content protection mechanisms.

Features of any of the examples or embodiments outlined above may be combined to create additional examples or embodiments without losing the intended effect. It should be understood that the description of an embodiment or example provided above is by way of example only, and various modifications could be made by one skilled in the art. Furthermore, one skilled in the art will recognize that numerous further modifications and combinations of various aspects are possible. Accordingly, the described aspects are intended to encompass all such alterations, modifications, and variations that fall within the scope of the appended claims.

## Claims

1. A computer-implemented method for determining at least one suspicious subscriber to a service in a content streaming system (100) delivering encrypted contents to devices (200), the method comprising the steps of:
changing a plurality of keys (520), each key being associated with at least one specific streaming content and delivered to devices within DRM licenses to decrypt the content for playback;
monitoring license requests (515, 525, 535) made by subscribers to at least one DRM server (120) delivering the DRM licenses to obtain monitoring data;
determining a suspicious activity (540) from at least one subscriber by analyzing a license request behavior of said at least one subscriber in relation to the key changes, based on the monitoring data.

2. The computer-implemented method of claim 1, wherein changing the plurality of keys (520) is performed within a scheduled first time interval (P).

3. The computer-implemented method according to claim 2, wherein determining a suspicious activity (540) is performed within a predetermined second time interval (P') set relative to the first time interval (P).

4. The computer-implemented method of claim 3, wherein the second time interval (P') has a first predetermined duration (D1) from start of the first time interval (P) and extending after the first time interval (P).

5. The computer-implemented method of claim 3 or 4, wherein the second time interval (P') has a second predetermined duration (D2) before start of the first time interval (P), the second duration (D2) being less than the first duration (D1).

6. The computer-implemented method according to any of claims 3 to 5, further comprising:
- generating (515), by the at least one DRM license server (120), the monitoring data for the license requests made by subscribers;
- centrally storing (535) the monitoring data in a database (121),
- retrieving (542) from the database (121) the monitoring data for the license requests made within the second time interval (P').

7. The computer-implemented method of any of claims 2 to 6, wherein the plurality of keys is changed simultaneously within the first time interval (P).

8. The computer-implemented method of any of claims 2 to 6, wherein the keys of the plurality of keys are respectively changed at different times within the first time interval (P).

9. The computer-implemented method of any of claims 2 to 8, wherein the first time interval (P) is scheduled within a period of time when the number of active subscribers in an expected audience is below a predetermined first audience threshold (TSH1).

10. The computer-implemented method of any of claims 2 to 8, wherein the first time interval (P) is scheduled within a period of time when a specific content is being streamed and a number of active subscribers in an expected audience for said specific content is above a predetermined second audience threshold (TSH2), and, prior to changing a current key associated with a streaming content into a new key, both said current and new keys are included in a same DRM license delivered to devices.

11. The computer-implemented method of any of claims 2 to 10, wherein the step of changing a plurality of keys (520) comprises a series of key change processes (522), each key change process comprising changing a plurality of keys associated with a set of selected streaming contents, respectively executed within scheduled first time intervals (P0, P1, P2, ...) starting at different times.

12. The computer-implemented method according to any of claims 1 to 11, wherein determining a suspicious activity (540) is performed using a machine learning model (155).

13. The computer-implemented method according to any of claims 1 to 12, further comprising a step of scheduling (510) the changes of the plurality of keys.

14. The computer-implemented method according to claim 13, wherein the step of scheduling (510) is performed automatically.

15. A system (100) for determining at least one suspicious subscriber to a service in a content streaming system delivering encrypted contents to devices, the system comprising:
a key management module (110) configured to change a plurality of decryption keys, each decryption key being associated with at least one specific streaming content and delivered to devices within DRM licenses to decrypt the content for playback;
a monitoring system (120, 121) configured to monitor license requests made by subscribers to at least one DRM server delivering the DRM licenses to obtain monitoring data; and
an analysis module (150) configured to determine a suspicious activity from at least one subscriber by analyzing a license request behavior of said at least one subscriber in relation to key changes, based on the monitoring data.

16. A non-transitory computer-readable storage medium storing instructions that, when executed by a processor, cause the processor to perform a method for determining at least one suspicious subscriber to a service in a content streaming system delivering encrypted contents to devices, the method comprising:
changing a plurality of keys (520), each key being associated with at least one specific streaming content and delivered to devices within DRM licenses to decrypt the content for playback;
monitoring license requests (515, 525, 535) made by subscribers to at least one DRM server (120) delivering the DRM licenses to obtain monitoring data;
determining a suspicious activity (540) from at least one subscriber by analyzing a license request behavior of said at least one subscriber in relation to key changes, based on the monitoring data.
